# EUROPEAN PATENT SPECIFICATION

(11) **EP 1 334 170 B1**
(45) Date of publication and mention of the grant of the patent: **13.07.2011**
(21) Application number: 01993664.0
(22) Date of filing: 08.11.2001
(51) Int. Cl.: C10L 1/18, C10L 1/02

(54) **FUEL COMPOSITION**
BRENNSTOFFZUSAMMENSETZUNG
COMPOSITION DE CARBURANT

(30) Priority: 08.11.2000 GB 0027273; 08.11.2000 GB 0027275; 08.11.2000 GB 0027270
(43) Date of publication of application: 13.08.2003
(73) Proprietor: AAE Technologies International Limited, Dublin 2 (IE); Cognis IP Management GmbH, 40589 Düsseldorf (DE)
(72) Inventor: BONGART, Frank, 40670 Meerbusch (DE); HODGSON, William, Redhill Surrey RH1 6LG (GB); RAE, Alan AAE Technologies International Limited, Haywards Heath West Sussex RH16 1TX (GB); RÖDER, Jürgen, 40589 Düsseldorf (DE)
(74) Representative: Wells, Andrew
(86) International application number: PCT/GB2001/004947
(87) International publication number: WO 2002/038709

(56) References cited:
- EP-A- 0 319 060
- EP-A- 0 826 765
- WO-A-00/31216
- WO-A-95/03376
- WO-A-98/56878
- WO-A-99/15607
- WO-A-99/35215
- FR-A- 2 470 153
- FR-A- 2 650 289
- US-A- 3 615 290
- US-A- 4 083 698
- US-A- 4 298 352
- US-A- 4 336 032
- US-A- 4 661 120
- US-A- 4 753 661
- US-A- 4 826 506
- PATENT ABSTRACTS OF JAPAN vol. 2000, no. 01, 31 January 2000 (2000-01-31) & JP 11 279572 A (NATL FOOD RES INST;KYOWA KAKO KK), 12 October 1999 (1999-10-12)

## Description

The present invention relates to fuel compositions which are free of alkanolamides and contain specific selected additives.

The invention furthermore relates to a process for the preparation of diesel oil/ethanol mixtures and the use of selected individual components as solubilisers for alcohol -containing diesel fuel.

The use of surfactants as additives for fuels has long been known. Thus, for example, British Patent GB 2 21 72 29 describes an additive which contains 48 parts by volume of an ethoxylated alcohol, 3 to 8 parts of lauric acid diethanolamide, 3 to 8 parts of oleic acid diethanolamide and 1.5 to 4 parts of an ethoxylated oleic acid. Such compositions are suitable as additives which permit the dissolution of water in fuel and thus reduce the corrosion. However, problems arise when, instead of the water, for example short-chain alcohols are to be used as the mixed phase with the fuels. For this purpose, WO 98/17745 describes an alternative composition which contains 25% by volume of diethanolaxnide, 50% by volume of an ethoxylated alcohol and 25% by volume of a C₁₄ fatty acid ethoxylated with 7 mol ethylene oxide per mole of fatty acid. The additive is used for improving the solubility of ethanol in diesel, which in the end results in the reduction in the emissions of CO₂ and CO and NOₓ and particulate matter (PM) when the fuel is burned in a compression-ignition engine. US-A-4 083 698 describes a fuel composition comprising a HC fuel, an ethoxylated fatty acid and oil 0.1 to 10 wt, % water. As in the past, the disadvantage is that a large number of individual substances have to be used to achieve the desired effect. There has long been a need for achieving dissolution of alcohol in fuel, preferably in diesel, by using economical additives which are as simple as possible, in order to achieve in this way a noticeable reduction in gaseous reaction products of combustion, in particular NOₓ and CO or CO₂ and PM.

It is an object of the present application to solve the problems described above.

Surprisingly, it has now been found that sufficient dissolution of ethanol in fuels, preferably in diesel fuel, can be achieved by using selected individual components.

According to a first aspect of the invention we provide a fuel composition, which is substantially free of alkanolamides, containing at least 85% by volume of a hydrocarbon-based fuel, from 0.1 to 5% by weight of an ethoxylated fatty acid having 5 to 30 carbon atoms and 4 to 20 mol of ethylene oxide per mol of fatty acid and from 1 to 10% by vo lume of an alcohol wherein the fuel composition is substantially anhydrous, containing less than 0.2% by volume of water.

In the context of this application, fuels are understood as meaning all energy-supplying operating materials whose free combustion energy is converted into mechanical work. These include all types of motor and aviation fuels which are liquid at room temperature and atmospheric pressure. Motor fuels, for example for car or lorry engines, contain as a rule hydrocarbons, e.g. petrol fractions or higher-boiling mineral oil fractions. Diesel fuels are obtained from gas oil by cracking or from tars which are obtained in the low-temperature carbonisation of lignite or hard coal. Customary products have a density of between 0.83 and 0.88 g/cm³, a boiling point between 170 and 360°C and flash points between 70 and 100°C. The hydrocarbon fuel may comprise any known hydrocarbon fuel or mixtures thereof, therefore such fuels include but shall not be limited to diesel, e.g. petroleum diesel or biodiesel, gasoline, aviation fuel, alcohol, etc. Preferably, the fuels according to the invention contain petroleum diesel or consist of petroleum diesel. They also include the so-called biodiesel, i.e. a fatty acid methyl ester, preferably the methyl ester of rape seed oil fatty acid.

The fuels according to the invention are distinguished by the fact that they contain only a single ethoxylated fatty acid additive component and that consequently no expensive and complicated mixtures of different individual substance are required. This additive is described in more detail below.

The compositions according to the invention contain an ethoxylated fatty acid component. These fatty acid ethoxylates are known compounds and can be prepared by all methods known to a person skilled in the art. The fatty acid ethoxylates contained in the compositions according to the invention contain exclusively ethylene oxide groups. They contain between 4 and 20 mol of ethylene oxide and in particular 2 to 10 mol of ethylene oxide per mol of ester.

The fatty acid components used are fatty acids that have 5 to 30 C atoms and of natural or synthetic origin, in particular straight-chain, saturated or unsaturated fatty acids, including industrial mixtures thereof, as obtainable by lipolysis from animal and vegetable fats and oils, for example from coconut oil, palm kernel oil, soya oil, sunflower oil, colza oil, cottonseed oil, fish oil, beef tallow, and lard; specific examples are capryloc, capric, lauric, lauroleic, myristic, myristoleic, palmitic, palmitoleic, oleic, elaidic, arachic, gadoleic, behenic, and erucic acid.

The ethoxylated additive component is preferably chosen so that its HLB value is less than 12. The value is calculated as follows:
HLB = Molecular weight of the hydrophilic chain x 20 / total molecular weight.

According to a further aspect of the invention, the hydrocarbon-based fuel includes an amount of an alcohol, such as ethanol. When the hydrocarbon-based fuel comprises ethanol, then the amount of ethanol present may vary, but is preferably present in an amount of from 1 to 10% by weight. Thus the fuel composition of the invention may comprise at least 85% by weight of a hydrocarbon-based fuel, from 1 to 10% by weight of an alcohol such as ethanol and from 0.1 to 5% by weight of an ethoxylated fatty acid additive as defined herein.

The fuel compositions according to the invention are prepared by mixing the ethoxylated fatty acid component individually with a fuel/ethanol mixture. Preferred fuel compositions are those in which the volume ratio (v/v) of fuel, e.g. petroleum diesel to additive is in the range of 1000 : 0.5 to 60, and preferably of 1 000 : 1 to 1000 : 60.

In a preferred embodiment of the invention we provide a fuel composition consisting of 90 to 94.5% by weight of diesel oil, 5 to 8 % by weight of ethanol and 0.5 to 2% by weight of an ethoxylated fatty acid additive according to the above description.

The use of the additives according to the invention makes it possible to prepare mixtures of fuels with ethanol, preferably petroleum diesel with ethanol, in an economical manner. Preferably, a maximum of 0.5 to 2.0% by weight of additive are added to the diesel oil/ethanol mixture. Water may also be present. It is particularly preferable to use substantially anhydrous ethanol which preferably contains lass than 0.5 % by volume of water. Furthermore, the total fuel composition is anhydrous, i.e. the water content should be less than 0.2 % volume, preferably less than 0.11% by volume.

A further aspect of the present invention relates to a fuel composition consisting of 88 to 98.5% by weight of diesel oil, 1 to 10% by weight of ethanol and 0.5 to 2% by weight of an ethoxylated fatty acid additive according to the above description.

For fuels, ethanol may be produced from fossil fuel feedstocks or by fermentation of sugars derived from grains or other biomass materials. Therefore, ethanol suitable for use in accordance with the fuel compositions of the invention may be fuel grade ethanol derived from yeast or bacterial fermentation of starch-based sugars. Such starch-based sugars may be extracted from corn, sugarcane, tapioca and sugar beet. Alternatively, fuel grade ethanol may be produced via known dilute and/or concentrated acid and/or enzymatic hydrolysis of a particular biomass material, for example, from waste industrial sources include, cellulosic portions of municipal solid waster, waste paper, paper sludge, saw dust. Biomass may also be collected from agricultural residues included, for example, rise husks and paper-mill sludge.

A suitable fuel grade ethanol for use in accordance with the invention may contain none or only contaminant levels of water. It should be noted that fuels containing, e.g. ethanol, may contain trace amounts of water. Thus, for example, anhydrous ethanol will generally contain up to 0.5% w/w of water. Therefore, hereinafter reference to an anhydrous fuel composition should be understood be a composition which is substantially free of water, but may contain, for example, up to 0.5% w/w of water. Alternatively, a suitable fuel grade ethanol for use in accordance with the invention may contain higher amounts of water, up to 5% w/w (hydrous ethanol).

Use of ethanol in combination with a diesel fuel has previously posed problems wherein the ethanol/diesel fuel mixture would undesirably separate into two distinct phases, especially when water is present, and render the resultant mixture unsuitable for use as a combustible fuel. The use of the fuel additives of the invention permits hydrous ethanol to be blended satisfactorily with conventional diesel fuel without forming two phases. The use of fuel grade ethanol blended in accordance with the invention imparts desirable combustion characteristics to the overall fuel composition; such as improved fuel stability, lower smoke and particulate matter, lower CO and NOx emissions, improved antiknock characteristics, and/or improved anti-freeze characteristics.

The presence of the additive of the invention ensures that the fuel composition forms a consistent stable homogenous composition and creates a monolayer simultaneously a result of which leads to a better more complete burn which reduced pollution and increases miles per gallon.

As a result of a blended fuel, particularly alcohol based, is able to combust more precisely with a cooler charge to reduce the iron-formates present from the aldehyde peracids and peroxide reactions normally attributable to engine degradation.

We further provide a method of running an internal combustion engine comprising the use of a fuel composition of the invention.

International Patent Application No. WO99/35215, Wenzel, describes an additive for combustible fuels which includes a nitrogen source, such as urea. Whilst the additive is said to reduce NOx, the compositions are very complex and include numerous ingredients, including:
a water soluble alcohol,
a C6 to C12 alcohol
a C6 to C18 ethoxylated alcohol
a C10 to C24 fatty acid, and
a nitrogen source.

We have now surprisingly found that the fuel composition of the invention can comprise very low fuel: additive ratios in combination with nitrogenous compounds, such as urea.

Thus according to the invention we provide a fuel composition as hereinbefore described and a nitrogen source.

The nitrogen compound may be selected from the group consisting of ammonia, hydrazine, alkyl hydrazine, dialkyl hydrazine, urea, ethanolamine, monoalkyl ethanolamine, and dialkyl ethanolamine wherein alkyl is independently selected from methyl, ethyl, n-propyl or isopropyl. Urea is preferred. The nitrogen compound may be an anhydrous compound or a hydrous compound, e.g. an aqueous solution, and may be up to a 5% w/w aqueous solution.

According to a yet further feature of the invention we provide a method of solubilising a nitrogen compound in a fuel composition which comprises mixing a hydrocarbon fuel, a nitrogen compound and a fuel additive as hereinbefore described. The method of the invention may optionally include the addition of an alcohol, such as ethanol or water, as hereinbefore described.

We also provide the use of a nitrogen compound in the manufacture of a fuel additive of this aspect of the invention. We especially provide the use of urea in the manufacture of fuel additive of the invention.

In the fuel composition in this aspect of the invention the nitrogen compound may be added by being incorporated into the fuel additive or may be added separately. Furthermore, the nitrogen compound may be added as an aqueous solution.

The fuel composition of the invention may also optionally comprise a cetane booster in amount of from 0.1% v/v to 1.0% v/v, based on the volume of the mixture. When a cetane booster is included in the fuel composition of the invention it may be added as part of the fuel additive of the invention or it may be added separately.

A suitable cetane booster for use in the mixture is selected from the group comprising, 2-ethylhexyl nitrate, tertiary butyl peroxide, diethylene glycol methyl ether, cyclohexanol, and mixtures thereof. The amount of cetane booster present in the mixture is a function of the cetane value of the particular diesel fuel and the amount of ethanol present in the particular fuel composition. Generally, the lower the diesel fuel cetane value, the higher the amount of the cetane booster, similarly, because ethanol typically acts as a cetane depressant, the higher the concentration of ethanol in the solution, the more cetane booster may be necessary in the mixture.

The fuel additives of the invention are advantageous in that, *inter alia,* they are more efficient at producing micro emulsions than prior art additives. Therefore, they are capable of more efficiently producing a stable, clear and homogenous solution with a hydrocarbon fuel, e.g. diesel/ethanol, even in the presence of water. Therefore, according to a further feature of the invention we provide a fuel composition as hereinbefore described, which optionally includes an amount of water, and wherein the fuel consists of a substantially stable, clear and substantially homogeneous solution.

Furthermore, the fuel additive or the fuel composition of the invention may also optionally include a demulsifier in an amount of less than 5% v/v and preferably less than 1% v/v based on the volume of the mixture.

The effect of the ethoxylated fatty acid additive is to be understood in the sense that it has a solubilising effect. Accordingly, the use of the ethoxylated fatty acid components as a solubiliser for ethanol-containing diesel fuels is also Claimed.

We also provide the use of an ethoxylated fatty acid component in the manufacture of a fuel composition as hereinbefore described.

The invention will now be described by way of example only.

### Example 1

The effect of the additives according to the invention was tested by the cold filter plugging point test (CFPP) according to EN 116 : 1997.

According to the test method, the additive-containing fuel was cooled stepwise to - 30°C for this purpose, in each case a sample being taken at 1°C temperature intervals and being sucked through a standardised filter means at reduced pressure of 2 kPa. The stated temperature value then corresponds to the temperature at which the fuel can no longer flow through the filter means in a specified time. Typical of the results obtained for compounds of the invention, was oleyl alcohol + 4.6 EO which gave a CFPP value of -18°C which corresponds to the value for diesel without additives.

### Example 2

### Preparation and Compositions

An additive composition was made up ethoxylated oleic acid and 1% by volume of this composition was added to 7.7% ethanol/92.3% diesel blends, including certification diesel, US No 1 (10% aromatic) diesel containing 0.1% cetane improver, resulting in optically clear and stable micro-emulsion fuels. These were tested as automotive fuels on a 1991 Detroit Diesel Series 60 engine using the EPA (USA Environmental Protection Agency) heavy duty engine certification test as described in the Code of Federal Regulations, Title 40, Part 86, Subpart N.

Toxic exhaust gas omissions were measured and compared with those of the base un-additised diesel. Significant reductions were obtained of toxic gases CO, CO₂, NOx and particulate matter.

### Example 3

A comparison was made of the solubilising efficiency of a typical additive of the invention viz. mono ethoxylated oleic acid and an additive of the prior art, when used to stabilise a fuel blend of hydrous ethanol (7.7%v/v) and diesel (92.3%v/v).

The prior art additive contained 25% diethanolamide, 50% ethoxylated C9-11 alcohol and 25% of a C14 fatty acid ethoxylated with 7 moles EO. Experimentally, ethanol/diesel blends were made up with water contents up to 0.6%v/v and the amount of additive required to produce clear, stable solutions determined volumetrically.

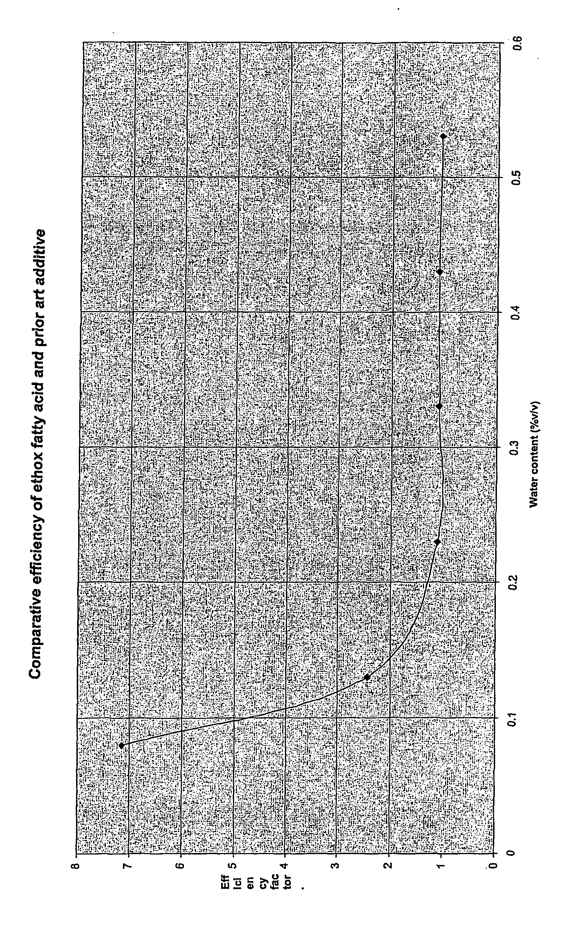

The solubilising ratio i.e. the volume of prior art additive divided by the volume of the additive of the invention, was plotted against water content (see fig.1). The results confirm that the additive of the invention is considerably more effective especially at low water concentrations.

### Example 4

### Petroleum Diesel/Biodiesel/Ethanol Blend

A Blend was made of certification diesel, biodiesel and ethanol stabilised with the surfactant additive described in Example 1. Engine exhaust emission tests showed reductions in CO, NOx and particulate matter compared with the base diesel.

### Example 5.

### Petroleum Diesel/Ethanol/Urea Blend

Example A solution of 0.25% urea in ethanol was blended in a 7.7:92.3 ratio with US No 1 diesel and 1.0% of additive was added to produce a clear micro-emulsion automotive fuel. Tests using this blend showed that toxic gas emissions were again lower than the base fuel, the urea having made a contribution to the reductions obtained.

### Example 6.

### Gasoline/ethanol blends

Blends were made up of EPA and CARB gasolines with various amounts of ethanol e.g. a typical blend contained 90% v/v gasoline and 10% ethanol. Small amounts, typically 1% v/v of the additive of the invention were added to the gasoline/ethanol blends and the resulting fuels tested as automotive fuels and the exhaust emissions compared with those of the base gasolines. The results confirmed that ethanol/gasoline blends combust to give lower levels of toxic gas emissions.

## Claims

1. A fuel composition, which is substantially free of alkanolamides, comprising at least 85% by volume of a hydrocarbon-based fuel, from 0.1 to 5% by weight of an ethoxylated fatty acid having 5 to 30 carbon atoms and 4 to 20 mol of ethylene oxide per mol of fatty acid and from 1 to 10% by volume of an alcohol wherein the fuel composition is substantially anhydrous, containing less than 0.2% by volume of water.

2. A fuel composition according to claim 1 wherein the alcohol is ethanol.

3. A fuel composition according to claim 2 wherein the ethanol contains less than 0.5% w/w of water.

4. A fuel composition according to any of claims 1 to 3 **characterised in that** the ethoxylated fatty acid contains between 2 and 10 mol of ethylene oxide per mol of ester.

5. A fuel composition according to claim 1 **characterised in that** the alkoxylated fatty acid is a fatty acid having 12 to 24 C atoms.

6. A fuel composition according to claim 1 **characterised in that** the fatty acid is selected from the group coconut oil, palm kernel oil, soya oil, sunflower oil, colza oil, cottonseed oil, fish oil, beef tallow, and lard; specific examples are caprylic, capric, lauric, lauroleic, myristic, myristoleic, palmitic, palmitoleic, oleic, elaidic, arachic, gadoleic, behenic, and erucic acid.

7. A fuel composition according to claim 1 **characterised in that** the hydrocarbon based fuel comprises a diesel oil.

8. A fuel composition according to claim 7 **characterised in that** the diesel oil is petroleum diesel.

9. A fuel composition according to claim 7 **characterised in that** a proportion of the diesel oil is a biodiesel.

10. A fuel composition according to claim 1 **characterised in that** the ethoxylated fatty acid has an HLB value of less than 12.

11. A fuel composition according to claim 1 **characterised in that** the diesel oil : additive volume ratio (v/v) is the range of 1000:0.5 to 1000: 50.

12. A fuel composition according to claim 1 **characterised in that** the composition contains less than 0.11 % by volume of water.

13. A fuel composition according to claim 1 **characterised in that** the composition consists of a substantially stable, clear and substantially homogeneous solution.

14. A fuel composition according to claim 7 **characterised in that** the composition consists of 88 to 98.5% by volume of diesel oil, 1 to 10 % by volume of ethanol and 0.5 to 2 % by volume of said alkoxylated fatty acid.

15. A fuel composition according to claim 1 which also incorporates a nitrogen source.

16. A fuel composition according to claim 1 which also incorporates a cetane booster in amount of from 0.1% v/v to 1.0 % v/v, based on the volume of the mixture.

17. A fuel composition according to claim 1 which also incorporates a demulsifier in an amount of less than 5% v/v.

18. A process for the preparation of a fuel composition according to claim 9 which comprises mixing an alkoxylated fatty acid having 12 to 24 carbon atoms and 4 to 20 mol of ethylene oxide per mol of fatty acid, in an amount of from 0.1 to 5% by volume with diesel oil and splash blending the mixture into a clear, stable fuel.

19. A process for the preparation of a fuel composition according to claim 1 which comprises
(i) dissolving an ethoxylated fatty acid having 5 to 30 carbon atoms and 4 to 20 mol of ethylene oxide per mol of fatty acid, in an amount of from 0.1 to 5% by volume in an alcohol; and
(ii) splash blending the solution with a hydrocarbon fuel.

20. A process according to claim 19 **characterised in that** the hydrocarbon fuel is diesel oil.

21. A method of running an internal combustion engine comprising the use of a fuel composition according to claim 1.

22. The use of an ethoxylated fatty acid having 5 to 30 carbon atoms and 4 to 20 mol of ethylene oxide per mol of fatty acid as a solubiliser for alcohol-containing diesel fuels.

## Patentansprüche

1. Brennstoffzusammensetzung, die im wesentlichen frei von Alkanolamiden ist, umfassend mindestens 85 Vol.-% eines Kohlenwasserstoff-basierten Brennstoffs, 0,1 bis 5 Gew.-% einer ethoxylierten Fettsäure mit 5 bis 30 Kohlenstoffatomen und 4 bis 20 Mol Ethylenoxid pro Mol Fettsäure und 1 bis 10 Vol.-% eines Alkohols, worin die Brennstoffzusammensetzung im wesentlichen wasserfrei ist, enthaltend weniger als 0,2 Vol.-% Wasser.

2. Brennstoffzusammensetzung nach Anspruch 1, worin der Alkohol Ethanol ist.

3. Brennstoffzusammensetzung nach Anspruch 2, worin das Ethanol weniger als 0,5 Gew.-% Wasser enthält.

4. Brennstoffzusammensetzung nach einem der Ansprüche 1 bis 3, **dadurch gekennzeichnet, daß** die ethoxylierte Fettsäure zwischen 2 und 10 Mol Ethylenoxid pro Mol Ester enthält.

5. Brennstoffzusammensetzung nach Anspruch 1, **dadurch gekennzeichnet, daß** die alkoxylierte Fettsäure eine Fettsäure mit 12 bis 24 Kohlenstoffatomen ist.

6. Brennstoffzusammensetzung nach Anspruch 1, **dadurch gekennzeichnet, daß** die Fettsäure ausgewählt ist aus der Gruppe Kokusnussöl, Palmkernöl, Sojaöl, Sonnenblumenöl, Rapsöl, Baumwollsamenöl, Fischöl, Rindertalg und Schweineschmalz; typische Beispiele sind Caprylsäure, Caprinsäure, Laurinsäure, Lauroleinsäure, Myristinsäure, Myristoleinsäure, Palmitinsäure, Palmitoleinsäure, Ölsäure, Elaidinsäure, Arachinsäure, Gadoleinsäure, Behensäure und Erucasäure.

7. Brennstoffzusammensetzung nach Anspruch 1, **dadurch gekennzeichnet, daß** der Kohlenwasserstoff-basierte Brennstoff ein Dieselöl umfaßt.

8. Brennstoffzusammensetzung nach Anspruch 7, **dadurch gekennzeichnet, daß** das Dieselöl Petroleumdiesel ist.

9. Brennstoffzusammensetzung nach Anspruch 7, **dadurch gekennzeichnet, daß** ein Teil des Dieselöls ein Biodiesel ist.

10. Brennstoffzusammensetzung nach Anspruch 1, **dadurch gekennzeichnet, daß** die ethoxylierte Fettsäure einen HLB-Wert von weniger als 12 aufweist.

11. Brennstoffzusammensetzung nach Anspruch 1, **dadurch gekennzeichnet, daß** das Volumenverhältnis (V/V) Dieselöl : Additiv im Bereich von 1000:0,5 bis 1000:50 liegt.

12. Brennstoffzusammensetzung nach Anspruch 1, **dadurch gekennzeichnet, daß** die Zusammensetzung weniger als 0,11 Vol.-% Wasser enthält.

13. Brennstoffzusammensetzung nach Anspruch 1, **dadurch gekennzeichnet, daß** die Zusammensetzung aus einer im wesentlichen stabilen, klaren und im wesentlichen homogenen Lösung besteht.

14. Brennstoffzusammensetzung nach Anspruch 7, **dadurch gekennzeichnet, daß** die Zusammensetzung aus 88 bis 98,5 Vol.-% Dieselöl, 1 bis 10 Vol.-% Ethanol und 0,5 bis 2 Vol.-% der alkoxylierten Fettsäure besteht.

15. Brennstoffzusammensetzung nach Anspruch 1, die auch eine Stickstoffquelle enthält.

16. Brennstoffzusammensetzung nach Anspruch 1, die auch einen Cetan-Booster enthält, in einer Menge von 0,1 bis 1,0 Vol.-%, bezogen auf das Volumen der Mischung.

17. Brennstoffzusammensetzung nach Anspruch 1, die auch einen Demulgator in einer Menge von weniger als 5 Vol.-% enthält.

18. Verfahren zur Herstellung einer Brennstoffzusammensetzung nach Anspruch 9, umfassend das Mischen einer alkoxylierten Fettsäure mit 12 bis 24 Kohlenstoffatomen und 4 bis 20 Mol Ethylenoxid pro Mol Fettsäure, in einer Menge von 0,1 bis 5 Vol.-%, mit Dieselöl und Spritzvermischen der Mischung zu einem klaren, stabilen Brennstoff.

19. Verfahren zur Herstellung einer Brennstoffzusammensetzung nach Anspruch 1, umfassend
(i) Lösen einer ethoxylierten Fettsäure mit 5 bis 30 Kohlenstoffatomen und 4 bis 20 Mol Ethylenoxid pro Mol Fettsäure, in einer Menge von 0,1 bis 5 Vol.-%, in einem Alkohol; und
(ii) Spritzvermischen der Lösung mit einem Kohlenwasserstoff-Brennstoff.

20. Verfahren nach Anspruch 19, **dadurch gekennzeichnet, daß** der Kohlenwasserstoff-Brennstoff Dieselöl ist.

21. Verfahren zum Betreiben eines Verbrennungsmotors, umfassend die Verwendung einer Brennstoffzusammensetzung nach Anspruch 1.

22. Verwendung einer ethoxylierten Fettsäure mit 5 bis 30 Kohlenstoffatomen und 4 bis 20 Mol Ethylenoxid pro Mol Fettsäure als Solubilisierungsmittel für alkoholhaltige Dieselbrennstoffe.

## Revendications

1. Composition de carburant, essentiellement exempte d'alcanolamides, comprenant au moins 85 % en volume d'un carburant à base d'hydrocarbures, de 0,1 à 5 % en poids d'un acide gras éthoxylé contenant de 5 à 30 atomes de carbone et de 4 à 20 mol d'oxyde d'éthylène par mol d'acide gras et de 1 à 10 % en volume d'un alcool, dans laquelle la composition de carburant, qui contient moins de 0,2 % en volume d'eau, est essentiellement anhydre.

2. Composition de carburant selon la revendication 1, dans laquelle l'alcool est l'éthanol.

3. Composition de carburant selon la revendication 2, dans laquelle l'éthanol contient moins de 0,5 % p/p d'eau.

4. Composition de carburant selon l'une quelconque des revendications 1 à 3 **caractérisée en ce que** l'acide gras éthoxylé contient entre 2 et 10 mol d'oxyde d'éthylène par mol d'ester.

5. Composition de carburant selon la revendication 1 **caractérisée en ce que** l'acide gras alcoxylé est un acide gras contenant de 12 à 24 atomes de carbone.

6. Composition de carburant selon la revendication 1 **caractérisée en ce que** l'acide gras est choisi dans le groupe constitué par l'huile de noix de coco, l'huile de palmiste, l'huile de soja, l'huile de tournesol, l'huile de colza, l'huile de coton, l'huile de poisson, le suif de boeuf, et le lard ; avec comme exemples spécifiques, l'acide caprylique, caprique, laurique, lauroléique, myristique, myristoléique, palmitique, palmitoléique, oléique, élaïdique, arachique, gadoléique, béhénique, et érucique.

7. Composition de carburant selon la revendication 1 **caractérisée en ce que** le carburant à base d'hydrocarbures comprend un carburant Diesel.

8. Composition de carburant selon la revendication 7 **caractérisée en ce que** le carburant Diesel est un Diesel de pétrole.

9. Composition de carburant selon la revendication 7 **caractérisée en ce qu'**une certaine proportion du carburant Diesel est un biodiesel.

10. Composition de carburant selon la revendication 1 **caractérisée en ce que** l'acide gras éthoxylé a un indice HLB inférieur à 12.

11. Composition de carburant selon la revendication 1 **caractérisée en ce que** le rapport en volume (v/v) carburant Diesel:additifs est dans la plage de 1000:0,5 à 1000:50.

12. Composition de carburant selon la revendication 1 **caractérisée en ce que** la composition contient moins de 0,11 % en volume d'eau.

13. Composition de carburant selon la revendication 1 **caractérisée en ce que** la composition se compose d'une solution essentiellement stable, limpide et essentiellement homogène.

14. Composition de carburant selon la revendication 7 **caractérisée en ce que** la composition se compose de 88 à 98,5 % en volume de carburant Diesel, de 1 à 10 % en volume d'éthanol et de 0,5 à 2 % en volume dudit acide gras alcoxylé.

15. Composition de carburant selon la revendication 1 qui contient également une source d'azote.

16. Composition de carburant selon la revendication 1 qui contient également un additif qui augmente l'indice de cétane, en une quantité de 0,1 à 1,0 % v/v, sur la base du volume du mélange.

17. Composition de carburant selon la revendication 1 qui contient également un agent désémulsionnant en une quantité inférieure à 5 % v/v.

18. Procédé de préparation d'une composition de carburant selon la revendication 9 qui comprend le mélange d'un acide gras alcoxylé contenant de 12 à 24 atomes de carbone et de 4 à 20 mol d'oxyde d'éthylène par mol d'acide gras, en une quantité de 0,1 à 5 % en volume, avec le carburant Diesel et le mélange en aveugle du mélange jusqu'à obtention d'un carburant stable et limpide.

19. Procédé de préparation d'une composition de carburant selon la revendication 1 qui comprend
(i) la dissolution d'un acide gras éthoxylé contenant de 5 à 30 atomes de carbone et de 4 à 20 mol d'oxyde d'éthylène par mol d'acide gras, en une quantité de 0,1 à 5 % en volume, dans un alcool ; et
(ii) le mélange en aveugle de la solution avec un carburant à base d'hydrocarbures.

20. Procédé selon la revendication 19 **caractérisé en ce que** le carburant à base d'hydrocarbures est un carburant Diesel.

21. Méthode de fonctionnement d'un moteur à combustion interne comprenant l'utilisation d'une composition de carburant selon la revendication 1.

22. Utilisation d'un acide gras éthoxylé contenant de 5 à 30 atomes de carbone et de 4 à 20 mol d'oxyde d'éthylène par mol d'acide gras à titre d'agent de solubilisation pour carburants Diesel contenant un alcool.
